# EUROPEAN PATENT APPLICATION

(11) **EP 3 587 875 A1**
(43) Date of publication of application: **01.01.2020**
(21) Application number: 19000312.9
(22) Date of filing: 28.06.2019
(51) Int. Cl.: F16K 1/02, F16K 27/02, F16K 31/50

(54) **VALVE FOR TAP**

(30) Priority: 28.06.2018 IT 201800002903 U
(71) Applicant: DK Service a company organized under the Laws of Italy, 28021 Borgomanero (NO) (IT)
(72) Inventor: Fregnan, Ada, I-28021 Borgomanero (NO) (IT)
(74) Representative: Aprà, Mario

(57) **Abstract**

a tap (R) with a valve, the valve comprising

a tubular cartridge (11) removably mounted in a tap valve seat (V), the cartridge (11) having a cartridge valve seat (11.2) at its bottom

an obturator (12.1) axially movable within the cartridge (11) for closing the cartridge valve seat

an operating stem (13) for operating the obturator, the stem being coupled at one end (13.2) to a tap handle (M) and on the other end (13.1) to the obturator,

water flow being controlled by the obturator (12.1) such that in an open state of the valve water enters the cartridge (11) through the cartridge valve seat (11.2) and exits the cartridge (11) laterally through an outlet (11.4) for dispensing water from the tap.

## Description

### Technical background

The present invention concerns a tap of a domestic water supply network, said tap being provided with a tap valve seat through which a flow of water to be dispensed through said tap of a domestic water supply network is branched.

### State of the art

In a domestic tap of known type, the outflow of water is regulated by means of a system configured to operate in two ways, i.e. through a conventional valve system, or with a ceramic disc valve system.

In the first case, regulation of the flow of water takes place by the use of a plate provided with a washer that exerts a pressure on a seat produced in the body of the tap around the fluid inlet orifice (i.e., where the fluid enters the sealed chamber of the tap). The plate is produced in one piece with a threaded rod, in turn connected to an external control (e.g., a handle that, by turning, screws or unscrews the threaded rod in the relative support fixed with respect to the tap, thereby determining the lifting or lowering of the plate with respect to the seat, so as to regulate the flow of water correspondingly).

On the other hand, in the second case, regulation of the flow of water takes place by determining the passage thereof between two ceramic discs provided with a plurality of holes, said ceramic discs being closed in a pack inside a cartridge, free to rotate one with respect to the other about their axis.

More in detail, the first disc is blocked in rotation by means of suitable joints produced in the cartridge and is configured to exert a pressure on the seat provided in the tap, so as to produce a seal thereon through the interposing of a washer, while the second disc is free to rotate about its axis through a rod operatively connected to an external control means (e.g., a handle or lever).

Therefore, said known system operates in the manner of a gate valve: when the holes in the ceramic discs are positioned aligned with one another, the fluid is free to flow between them and pass through the cartridge, to subsequently flow out through openings provided in the cartridge, while when the holes of the discs are not aligned with one another a barrier is created, which prevents passage of the fluid. By acting on the handle rotation of the upper disc (free to rotate) with respect to the disc below (fixed) can be varied, determining opening or closing of the holes and thereby regulating the flow of water.

### Technical problem

It can be noted how the aforesaid prior art regulation systems have various classes of problems in relation to operation and maintenance.

More in detail, the first of the systems described above, although essentially easy to handle, and also making it possible to achieve satisfactory precision in regulation of the flow of water, nonetheless has excessively lengthy travel in order to obtain lifting of the plate that regulates the flow, this being required to satisfy the necessary geometric proportions with respect to the dimensions of the seat of the tap. The pitch of the screw that controls the plate, and that presses on the seat, is therefore relatively fine in relation to the travel to be implemented. Only a screw with a fine pitch is able to exert a force on the plate that will adequately compress a washer having a relatively large diameter against a seat that is just as large (especially if this has a wide and flat structure rather than being conical). Therefore, when the tap implemented with said system is operated, the user has the impression that an excessive number of turns are required to operate it.

Another problem of the aforesaid prior art system concerns its maintenance. In particular, the aforesaid system is particularly exposed to phenomena of limescale build-up, which also affects the seat on the tap, thereby making it necessary not only to replace the washers (often also difficult to procure), but also to grind the seat using an appropriate grinding tool.

Instead, with regard to the second prior art system described above, it has a better quality of closing with respect to the system described above, as dripping that typically occurs in conventional valve systems when the washer thereof tends to harden through time is eliminated.

More specifically, in said ceramic disc systems, due to the inevitable geometric structure that the holes of the ceramic discs must have, during the opening/closing operations (normally through 90 degrees) the maximum flow is obtained already in the first 45-50 degrees, thus greatly reducing dosing sensitivity. Due to this drastic operation (indeed particularly unsuitable in the field of domestic taps), typical of barrier closing, these systems necessarily generate annoying phenomena of water hammer in the system.

On the other hand, said ceramic disc systems generate, during their operation, phenomena of particularly noisiness (which at times can also be heard in the dwellings adjacent to the dwelling in which the system is installed), even when operating with essentially low flow rates.

Moreover, it must be noted that rubbing of the two discs, which must necessarily adhere to one another to ensure an efficient level of seal, contributes to the generation of considerable rigidity during operation, which also makes it impossible to fit handles of small format. Further, it can be observed how the progressive consumption of lubricants (e.g., grease or the like) placed between the two discs during manufacture to limit friction and thus ensure better operation in terms of hydraulic seal, due to the passage of water, contributes to make handling operations even more rigid. Washing away of said lubricant also unavoidably compromises the fluid-tightness.

### Solution of the problem

As solution to the problems of the prior art set forth above, the present invention intends to provide a tap of a domestic water supply network that has an essentially simple structure.

It is also an object of the present invention to provide a tap as specified which has an implemented benefit in the related use in a domestic environment, both with regard to limiting any noisiness during use and with regard to its relatively simple use.

In view of these objects, the present invention provides a tap of a domestic water supply network according to the characterizing part of claim 1.

More specifically, the present invention provides a tap of a domestic water supply network, comprising at least one tap valve seat through which a flow of water to be dispensed through said tap is branched,
characterized in that said tap comprises:
- an interchangeable cartridge, partially housed in said fluid-tight tap valve seat and connected in a removable manner with respect to this seat, wherein said cartridge comprises:
- a tubular body at least partially housed with seal in said tap valve seat, and including a chamber in which there is provided a cartridge valve seat having a lower axial water inlet and at least one upper radial water outlet; and
- obturator means, axially movable with respect to said cartridge valve seat inside said tubular body, and including an obturator member configured to produce hydraulic seal, with interposing of washer means, with respect to said cartridge valve seat, and an operating stem of said obturator member, made in one piece, respectively connected coaxially with a first end, with respect to said obturator member, and connected with the other end with respect to a tap handle that can be gripped by the user,
and in that said interchangeable cartridge provides, in said tap valve seat, a first lower hydraulically sealed chamber, through which said lower axial water inlet is in fluid communication with a water supply pipe of said system, and a second lateral hydraulically sealed chamber, through which said at least one upper radial water outlet is in fluid communication with a water dispensing mouth of said tap.

Further advantageous features of the invention are described in the dependent claims.

### Brief description of the drawings

The features and the advantages of the present invention will be more apparent from the detailed description of an example of embodiment provided below with reference to the accompanying drawings, wherein:
- Fig. 1 is a perspective view with parts in an exploded view of a two-way tap (hot water and cold water) of a domestic water supply network, showing an interchangeable cartridge, according to an example of embodiment of the present invention;
- Fig. 2 is a partial perspective view of the tap of Fig. 1, in which said cartridge and a related control handle are omitted, and a tap valve seat is shown in the axial direction thereof;
- Fig. 3 is a perspective view in a larger scale of the interchangeable cartridge of Fig. 1;
- Fig. 4 is an exploded perspective view of the cartridge of Fig. 3;
- Fig. 5 is an elevational view of a top collar member of the interchangeable cartridge of Fig. 3;
- Fig. 6 is a sectional view according to the line VI-VI of Fig. 5;
- Fig. 7 is a bottom perspective view of the collar of Fig. 5;
- Fig. 8 is an elevational view of an operating stem of the interchangeable cartridge of Fig. 3;
- Fig. 9 is a perspective view of the stem of Fig. 8;
- Fig. 10 is an elevational view of an obturator member of the interchangeable cartridge of Fig. 3;
- Fig. 11 is a perspective view of the obturator member of Fig. 10;
- Fig. 12 is an elevational view of a valve body of the cartridge of Fig. 3, having a cartridge valve seat, a lower axial water inlet and a plurality of upper water radial outlets;
- Fig. 13 is a sectional view according to the line XIII-XIII of Fig. 12;
- Fig. 14 is a top perspective view of the valve body of Fig. 12;
- Fig. 15 is a perspective view of a variant of embodiment of the valve body of the cartridge of Fig. 3;
- Fig. 16 is a perspective view of the two-way tap of Fig. 1, in which a water dispensing spout and both regulation handles are omitted;
- Fig. 17 is a sectional view according to the line XVII-XVII of Fig. 16, but in which one of the two ways is provided with an interchangeable cartridge according to the example of embodiment of the invention;
- Fig. 18 is a perspective exploded view of a top collar and of an axial operating stem of the cartridge of Fig. 4, in disassembled condition, illustrating a variant of torque regulation means with which said stem is provided;
- Figs. 18A and 18B respectively show in a plan view and in an elevational view said torque regulation means of Fig. 18;
- Fig. 19 is an elevational view of said collar and axial stem of Fig. 18, but in an assembled condition;
- Fig. 20 is a sectional view according to the line XX-XX of Fig. 19;
- Fig. 21 is an exploded perspective view of a variant of embodiment of the upper collar and of the axial operating stem of the interchangeable cartridge, illustrating a further variant of embodiment of torque regulation means with which said stem is provided;
- Fig. 22 is an elevational view in a different scale of the cartridge of Fig. 3;
- Fig. 23 is a sectional view according to the line XXIII-XXIII of Fig. 22;
- Fig. 24 is a detail view in a larger scale of the detail XXIV of Fig. 23, showing the obturator member in hydraulically closed position with respect to the corresponding cartridge valve seat;
- Fig. 25 is a similar view to that of Fig. 22, but in which (as shown in Fig. 26) the obturator member is in hydraulically open position with respect to the corresponding cartridge valve seat;
- Fig. Fig. 26 is a sectional view according to the line XXVI-XXVI of Fig. 25;
- Fig. 27 is a detail view in a larger scale of the detail XXVII of Fig. 26;
- Fig. 28 is an elevational view of an axial operating stem and of an obturator member of the interchangeable cartridge, according to a variant of embodiment in which said stem and said obturator member are produced in one piece;
- Fig. 29 is a perspective view of the axial stem and of the obturator member of Fig. 28;
- Fig. 30 is an elevational view of a variant of embodiment of top collar means, configured to coact with the stem of Figs. 28 and 29;
- Fig. 31 is a sectional view according to the line XXXI-XXXI of Fig. 30;
- Fig. 32 is an elevational view in a different scale of the cartridge of Fig. 3, but incorporating the top collar means according to Figs. 30 and 31, and the axial stem with obturator member according to Figs. 28 and 29;
- Fig. 33 is a sectional view according to the line XXXIII-XXXIII of Fig. 32;
- Fig. 34 is a detail view in a larger scale of the detail XXXIV of Fig.33, showing the obturator member in hydraulically closed position with respect to the corresponding cartridge valve seat;
- Fig. 35 is a similar view to that of Fig. 32, but in which (as shown in Fig. 36) the obturator member is in hydraulically open position with respect to the corresponding cartridge valve seat;
- Fig. 36 is a sectional view according to the line XXXVI-XXXVI of Fig. 35;
- Fig. 37 is a detail view in a larger scale of the detail XXXVII of Fig. 36;
- Fig. 38 is a similar view to that of Fig. 21, but in which the axial operating stem has a different arrangement of radial flanges and the collar means have a different structure;
- Fig. 39 is an elevational view illustrating the top collar means and the axial stem of Fig. 38 in the assembled condition;
- Fig. 40 is a sectional view according to the line XL-XL of Fig. 39;
- Fig. 41 is an elevational view of a variant of embodiment of the top collar means and of the related axial stem, in the assembled condition;
- Fig. 42 is a sectional view according to the line XLII-XLII of Fig. 41;
- Fig. 43 is a detail view in a larger scale of the detail XLIII of Fig. 42, in which the presence of clearances between parts of the cartridge is highlighted;
- Figs. 44 to 46 are views respectively similar to those of Figs. 41 to 43, but in which (in Fig. 46) the presence of different clearances between parts of the cartridge is highlighted, with respect to Fig. 43;
- Fig. 47 is an exploded perspective view of a variant of embodiment of the cartridge of Fig. 4;
- Fig. 48 is an exploded detail view in a larger scale of an obturator member of the cartridge of Fig. 47;
- Fig. 49 is an elevation view of the detail of Fig. 48, in the assembled condition;
- Fig. 50 is a sectional view according to the line L-L of Fig. 49;
- Fig. 51 is a perspective view of the two-way tap of Fig. 1, in which the water dispensing spout and both regulation handles are omitted;
- Fig. 52 is a sectional view according to the line LII-LII of Fig. 51, but in which one of the two ways is provided with an interchangeable cartridge according to the variant of embodiment illustrated in Fig. 47, showing the obturator member in hydraulically open position with respect to the corresponding cartridge valve seat;
- Fig. 53 is a detail view in a larger scale of the detail LIII of Fig. 52;
- Fig. 54 is a perspective view of the two-way tap of Fig. 1, in which the central water dispensing spout and both regulation handles are omitted;
- Fig. 55 is a sectional view according to the line LV-LV of Fig. 54, but in which one of the two ways is provided with an interchangeable cartridge according to the variant of embodiment illustrated in Fig. 47, showing the obturator member in hydraulically closed position with respect to the corresponding cartridge valve seat;
- Fig. 56 is a detail view in a larger scale of the detail LVI of Fig. 55;
- Fig. 57 is an exploded detail view in a larger scale of a variant of the obturator member of Fig. 48;
- Fig. 58 is an elevational view of the detail of Fig. 57, in the assembled condition;
- Fig. 59 is a sectional view according to the line LIX-LIX of Fig. 58.

### DESCRIPTION OF AN EXAMPLE OF EMBODIMENT OF THE INVENTION

The detailed description of an example of embodiment of a tap of a domestic water supply network according to an example of embodiment of the present invention is provided hereunder.

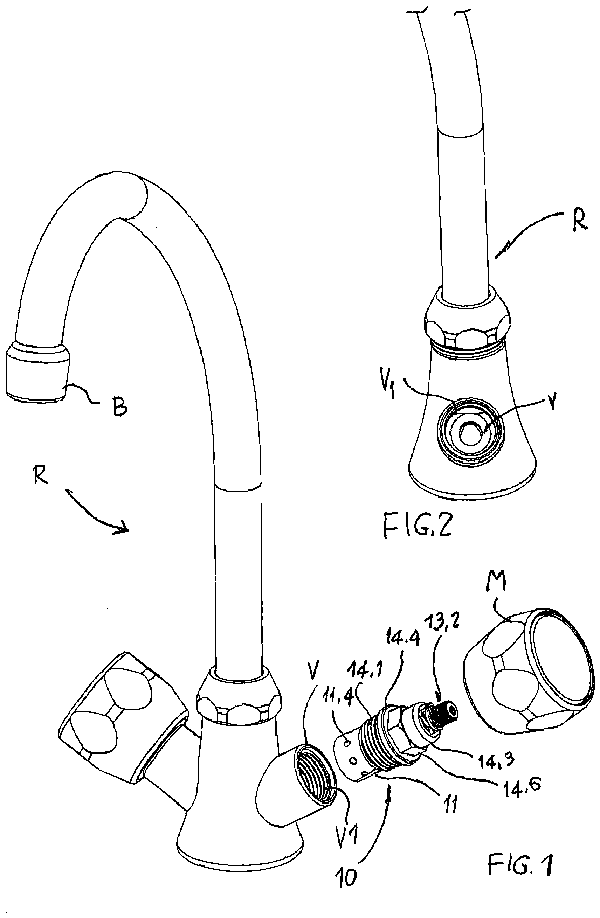

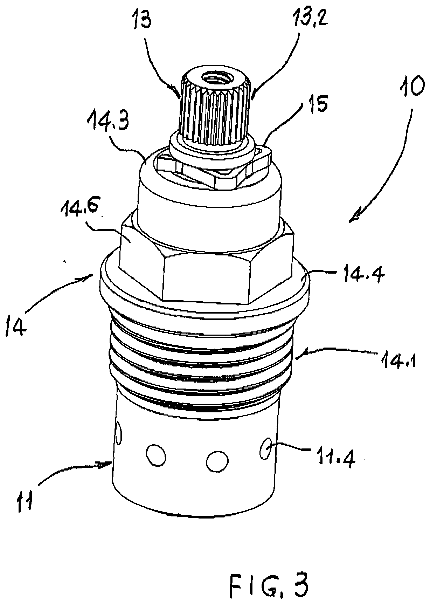

### First embodiment (Figs. 1-27)

Fig. 1 indicates with R a tap of a domestic water supply network R, comprising a tap valve seat V through which a flow of water to be dispensed through said tap R is branched.

Said tap R comprises an interchangeable cartridge 10 (Fig. 1, 3, 4), partially housed in said fluid-tight tap valve seat V and connected in a removable manner with respect to this seat V.

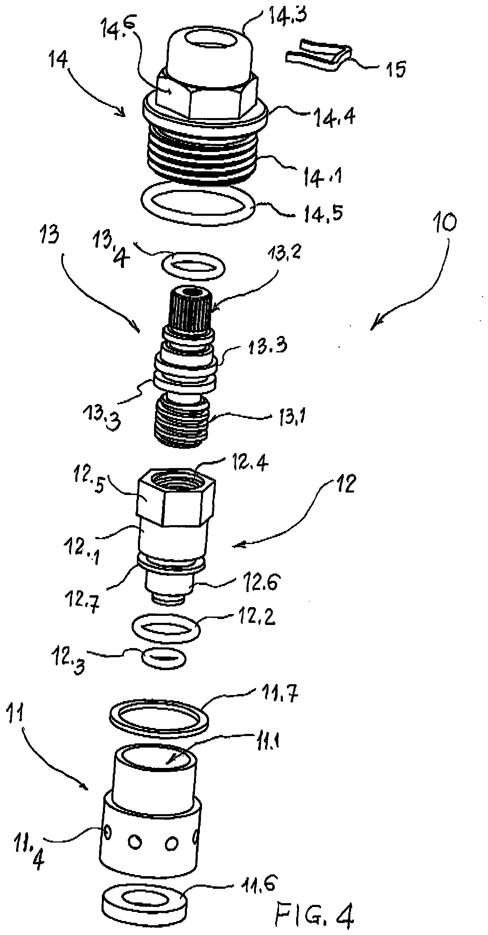

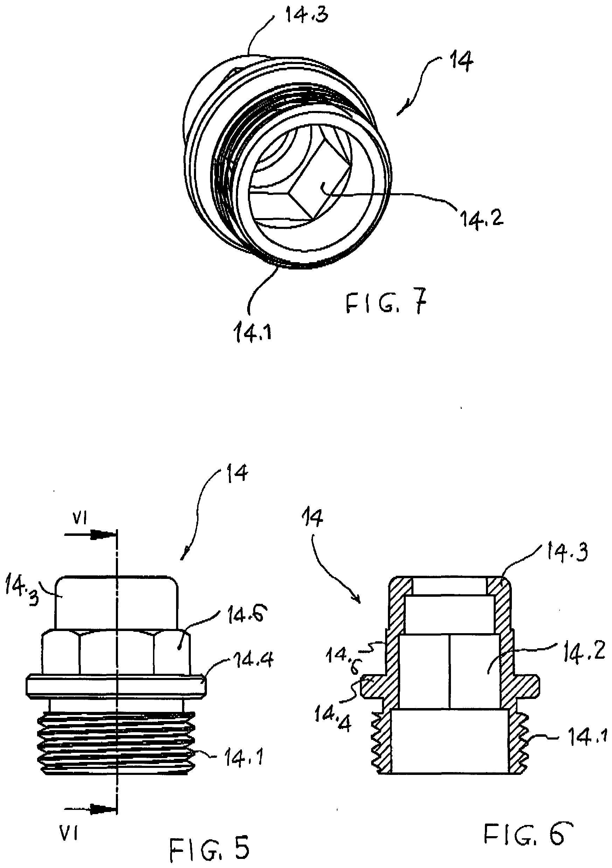

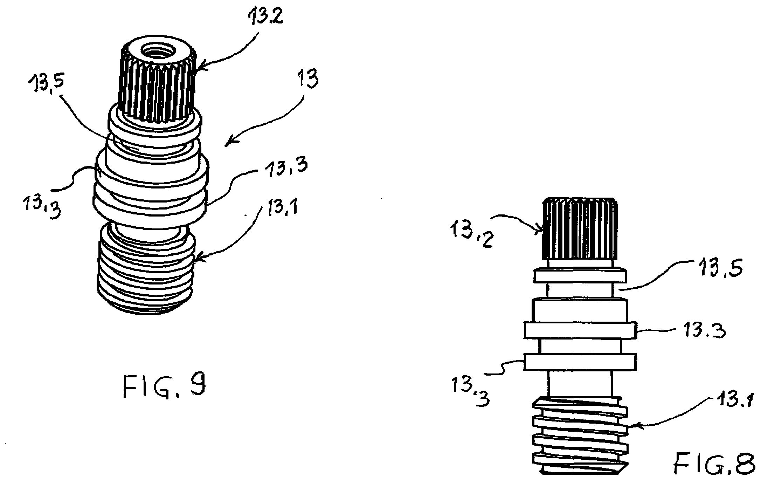

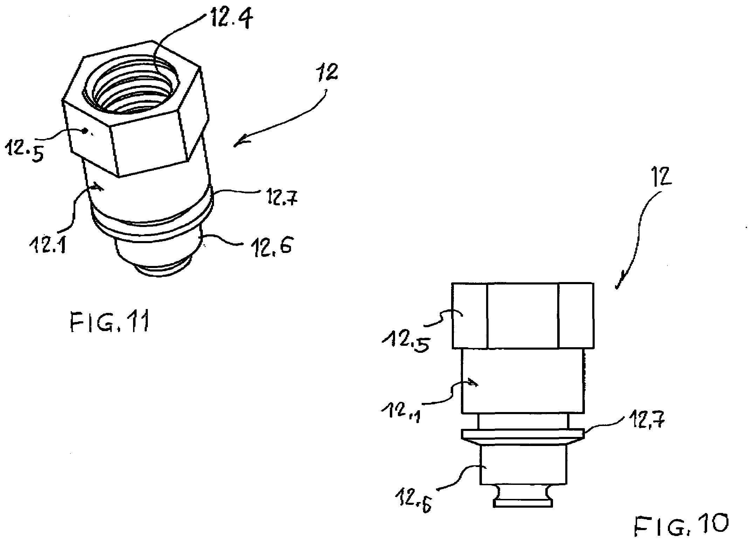

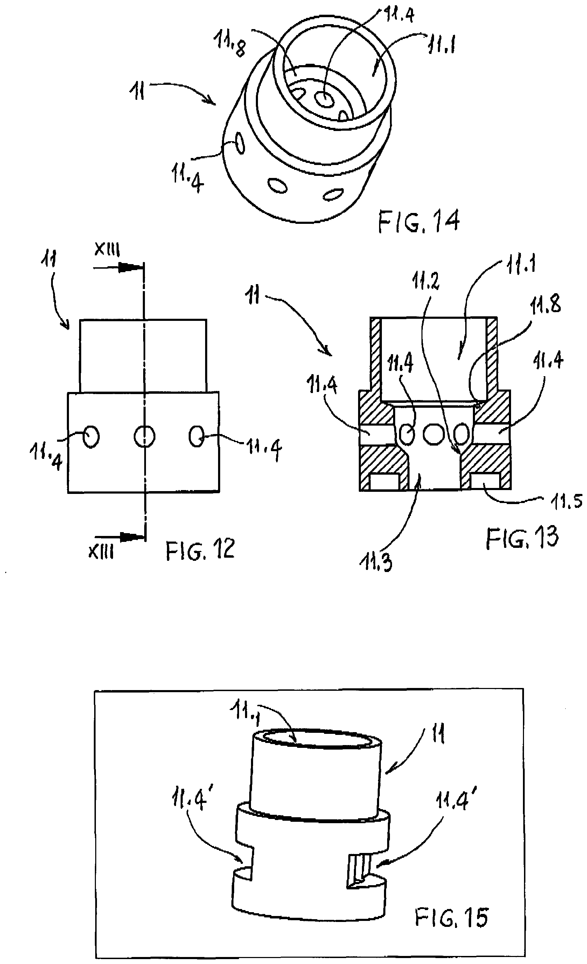

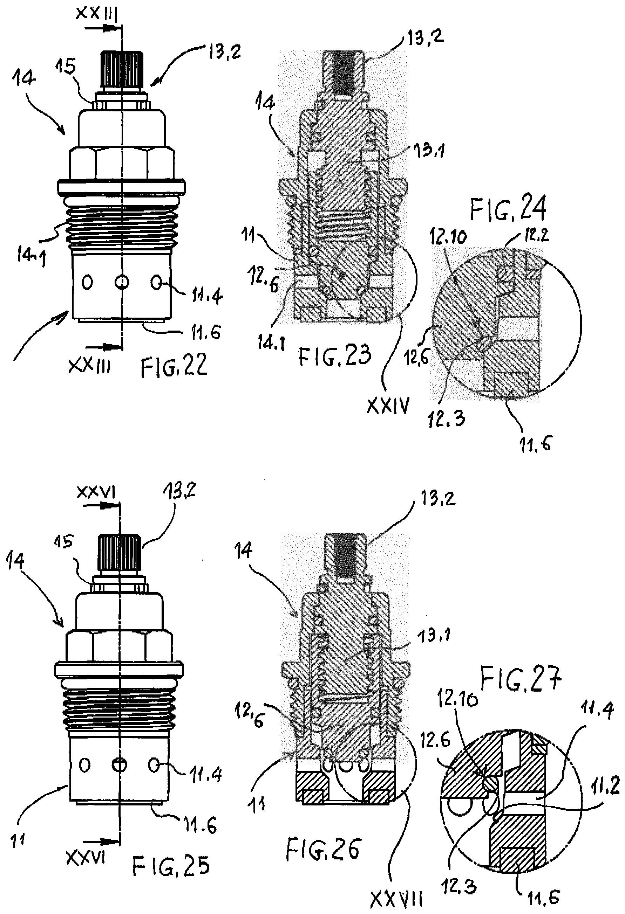

Said cartridge 10 (Fig. 4) comprises:
- a cylindrical tubular body 11, for example made of plastic, housed with seal in said tap valve seat V, and including a chamber 11.1 (Fig. 13), in which there is provided a cartridge valve seat 11.2, having a lower axial water inlet 11.3 and at least one upper radial water outlet 11.4, with respect to said cartridge valve seat 11.2; and
- obturator means 12 (Fig. 10, 11), axially movable with respect to said cartridge valve seat 11.2 inside said tubular body 11, and including an obturator member 12.1 configured to produce hydraulic seal, with interposing of washer means 12.2, 12.3 (Figs. 4, 26), with respect to said cartridge valve seat 11.2, and an operating stem 13 (Fig. 8, 9), configured to translate said obturator member 12.1 and a first end 13.1 of which is coaxial and connected in a movable manner with respect to said obturator member 12.1, and the other end 13.2 of which is connected with respect to a tap handle M (Fig. 1) that can be gripped by the user. Said cartridge 10 is completed by means top collar means 14 (Figs. 5 - 7), in which said obturator member 12.1 and said operating stem 13 are coaxially and partially inserted. Tubular body 11, obturator means 12, operating stem 13 and top collar means 14 are arranged coaxial to one another and with respect to said cartridge valve seat 11.2, while said obturator member 12.1 is prevented from rotating with respect to said collar means 14.

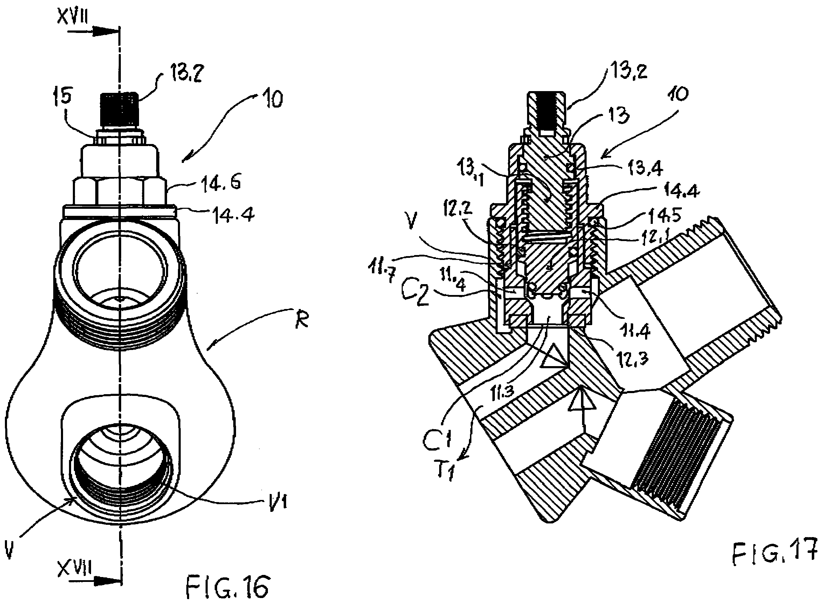

Said interchangeable cartridge 10 provides, in said valve seat V, a first chamber C1 (Fig. 17), lower and with hydraulic seal, through which said lower axial water inlet 11.3 is in fluid communication with a fixed water supply pipe T1, and a second chamber C2, upper and with hydraulic seal, through which said at least one upper radial water outlet 11.4 is in fluid communication with a water dispensing mouth B (Fig. 1) of said tap R.

Said cylindrical tubular body 11 (Figs. 12-14) comprises a front annular seat 11.5, when installed facing toward the bottom of the tap valve seat V, in which a front annular washer 11.6 is housed (Fig. 4). In the embodiment illustrated, said tubular body 11 is provided with a plurality of upper radial water outlets 11.4, comprising a ring of radial through holes. An O-ring 11.7 (Fig. 4) is interposed between a shoulder of said tubular body 11 and a lower end area of said collar means 14.

Said obturator member 12.1 (Figs. 10, 11, 23, 26) comprises a cylindrical cup shaped member, having an inner thread 12.4, emerging in the upper end area of said cup shaped body, at an outer hexagonal flange 12.5, having a spline function and integral with this cup shaped body. At the bottom, said obturator member 12.1 has a solid integral head 12.6, surmounted by an outer flange 12.7. Said washer means 12.2 are housed in a groove overlying said flange 12.7.

At the lower end of said integral head 12.6, there are provided said washer means 12.3 (Fig. 23, 24, 26, 27), housed in a corresponding annular groove 12.10 of said head 12.6, and which are configured to produce the hydraulic seal at said cartridge valve seat 11.2.

Said operating stem 13 has said first end 13.1 threaded in a manner corresponding to the inner thread 12.4 of said obturator member 12.1, with respect to which it is engaged through helical coupling. At the top of said end 13.1, said operating stem 13 has a pair of flanges 13.3, coaxial and spaced apart, between which there are inserted hydraulic seal means configured as a spring ring 13.4 (Fig. 4). The upper end 13.2 of said operating stem 13 has a plurality of axial grooves, for positive mechanical engagement with respect to a correspondingly grooved seat of the movement handle M.

Said top collar means 14 (Figs. 5-7) have an externally threaded cylindrical tubular lower end 14.1, an intermediate part 14.2 internally configured as a hexagonal seat to receive in positive engagement said outer hexagonal flange 12.5 of said obturator means 12, and an upper end area 14.3, coaxial with respect to the lower end area 14.1, and configured as a ring for the passage therethrough of said upper grooved end 13.2 of said operating stem 13. An outer flange 14.4 is superimposed with respect to hydraulic seal means 14.5, configured as O-ring, above said lower end area 14.1. In said intermediate part 14.2 of said collar means 14 there is provided an integral outer hexagonal head 14.6 for an assembly wrench tool.

Said upper end 13.2 of said operating stem 13 has a groove 13.5 (Fig. 8), emerging with respect to said upper end area 14.3 of said end collar means 14, and in which a U-shaped spring gripper 15 is engaged in a removable manner (Figs. 4, 23, 26), which secures said operating stem 13 in position with respect to said collar means 14, allowing the rotation thereof about the axis of the cartridge 10.

Said tubular body 11 is inserted with slight force, in a removable and coaxial manner, with an upper end area thereof inside said lower end area 14.1 of said collar means 14.

On the other hand, said externally threaded lower end area 14.1 of said collar means 14 is engaged in a removable manner in a corresponding inner thread V1 of said tap valve seat V, ensuring installation of said cartridge 10. Moreover, said flange 12.7 (Fig. 10) of said obturator member 12.1 is configured as stop means that, at the end of travel of said obturator member 12.1, abuts against a corresponding inner annular shoulder 11.8 (Fig. 13) of the chamber 11.1 of the tubular body 11, which is located above said at least one upper radial outlet 11.4.

It can be noted that the cartridge valve seat 11.2 is, according to the example illustrated, produced in one piece with said tubular body 11. In a variant, however, the cartridge valve seat can be produced as a separate member and then positioned inside said tubular body. In the latter case, tubular body and cartridge valve seat can also be made of different materials.

In fact, said tubular body 11 is not subject to structural stresses and can advantageously be made of plastic polymer, isolating from an electrochemical point of view the valve seat V of the tap R and the hydraulic closing device.

It can be noted, with reference to Fig. 15, that said tubular body 11 is provided, in a variant, with a pair of upper radial outlets 11.4', formed by respective diametrically opposite slots.

### Operation (Figs. 16, 17, 22 - 27)

It can be noted that the obturator member 12.1 is prevented from rotating as its hexagonal flange 12.5 is engaged, in positive mechanical engagement, with respect to the hexagonal cavity 14.2 of the collar means 14. In particular, the height of said hexagonal cavity 14.2 is greater than or equal to the travel of said obturator member 12.1 with respect to the tubular body 11 and respective cartridge valve seat 11.2.

It can also be noted that the hydraulic seal, when the cartridge 10 is mounted in the tap R, is ensured by:
- the washer 11.7 between tubular body 11 and top collar means 14;
- the washer 14.5 under the outer flange 14.4 of the top collar means 14;
- the washer 13.4 between the pair of flanges 13.3 of the operating stem 13;
- the washer 12.2 in the groove above the outer flange 12.7 of the obturator member 12.1.

It can be noted that the O-ring washer 12.3 produces the hydraulic seal between cartridge valve seat 11.2 and obturator member 12.1 at the end of travel of the latter (Fig. 24).

As can be easily understood, the travel of the obturator member 12.1 with respect to the tubular body 11 is determined by the user, by means of rotation of the handle M, and hence of the operating stem 13, in one or other direction of rotation. The helical coupling between the externally threaded end 13.1 of the stem 13 and the internally threaded end 12.4 of the obturator member 12.1, as the latter is prevented from rotating, determines the corresponding axial translation of this obturator member 12.1.

In the variants below, parts similar to those previously described with reference to the example of embodiment are indicated with the same references.

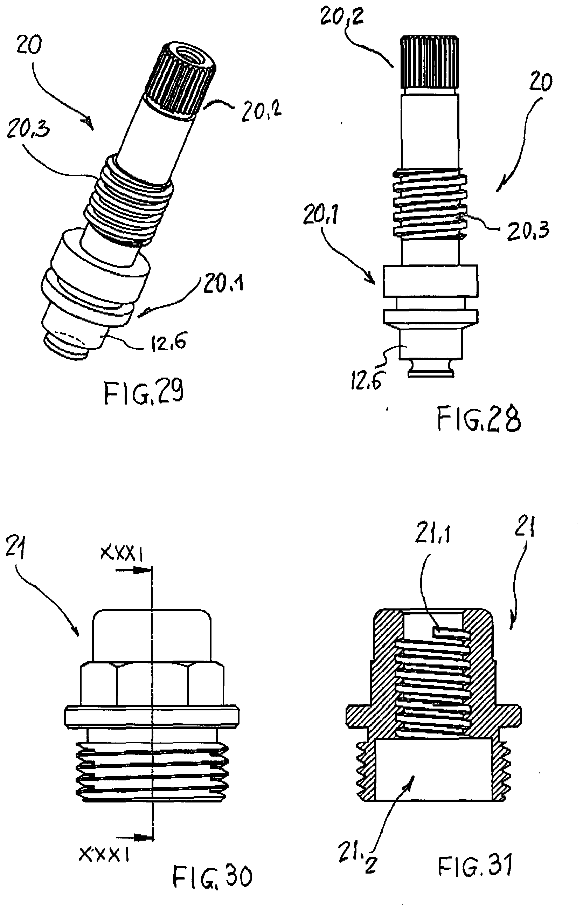

### First variant of embodiment (Figs. 28 - 37)

In this variant, the operating stem and the obturator member are produced in a single rod-like body, indicated as a whole with 20.

Said rod-like body 20 has an upper axial end 20.2 configured as operating stem having the upper end the same as that of the operating stem 13, for positive mechanical engagement with respect to a correspondingly grooved seat of the operating handle M.

Said rod-like body 20 has a lower axial end 20.1 configured as obturator member having the same solid integral head 12.6 as the obturator member 12.1, surmounted by an outer flange, to house the corresponding washer means.

Said rod-like body 20 also has, in its intermediate part, an outer thread 20.3.

Correspondingly, top collar means 21 are provided, in an upper end area, with an inner thread 21.1 corresponding to said external thread 20.3 of said rod-like body 20 and emerging at the top. Said thread 20.3 of said rod-like body 20 is connected with helical coupling with respect to said thread 21.1 of said collar means 21.

A cylindrical cavity 21.2 is provided in a lower end area of said collar means 21, in which said inner thread 21.1 also emerges.

Moreover, said cavity 21.2 of said collar means 21 is configured for the removable connection of a part of upper end of said tubular body 11.

Said top collar means 21 also have said externally threaded lower end area, an intermediate part configured externally as a hexagon for a hexagon wrench tool.

In all other respects, the collar means 21 are similar to the collar means 14. According to the present variant, the rod-like body 20 is driven directly in rotation by means of the handle M and performs a combined rotation and axial translation movement with respect to the collar body 21 and to the tubular body 11 and, hence, to the cartridge valve seat 11.2 according to the first embodiment.

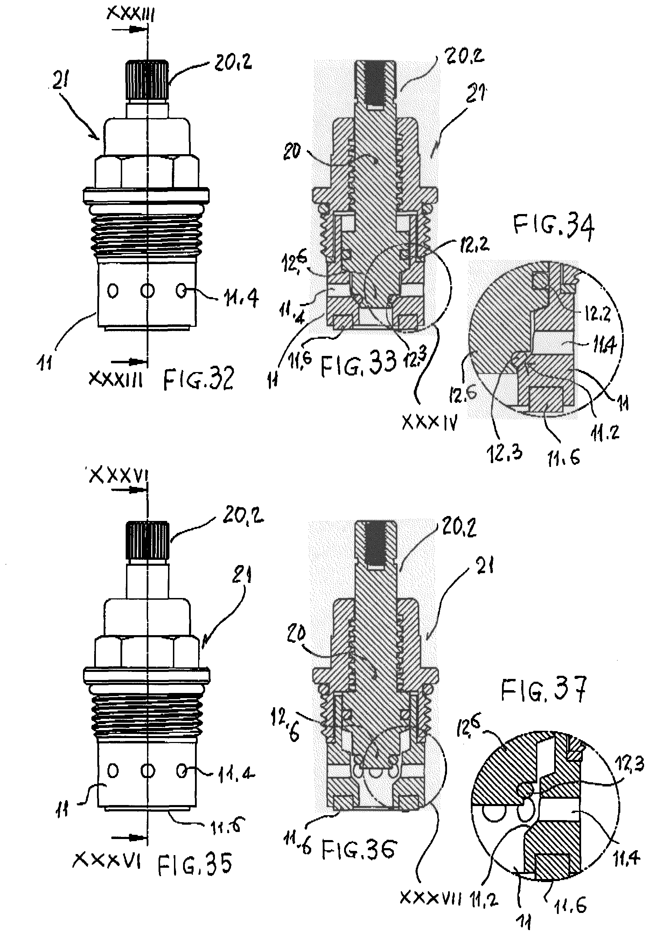

Figs. 32 to 37 illustrate two different operating arrangements of the rod-like body 20 with respective obturator member in hydraulically closed position (Fig. 33) and in hydraulically open position (Fig. 36).

Also in this case, as can be observed in Fig. 34, the closing end of travel of the obturator member is determined by means of an end of travel stop present on the moving element that abuts against a stop present in the tubular body, preventing excessive compression of the hydraulic seal means.

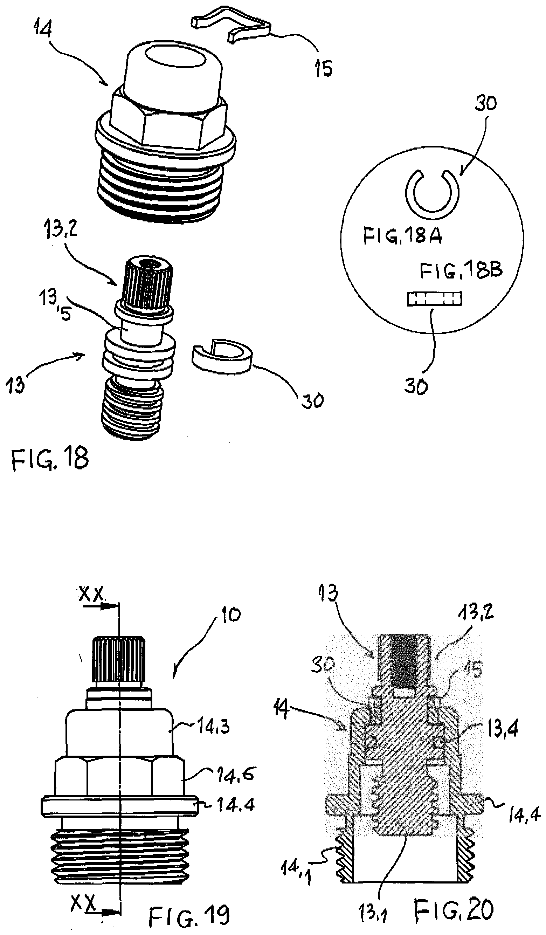

### Second variant of embodiment (Figs. 18 - 20)

According to the invention, the interchangeable cartridge 10 is provided with inexpensive friction braking means, to increase the operating torque preventing it from being too soft and sensitive to the movements of the user when levers are used as control member instead of handles. In fact, it is good practice for the torque necessary to operate a tap to require the same force by the user, regardless of the type of control member selected. According to the present variant, the braking means consist of a C-shaped retaining ring 30, which is inserted on the upper end 13.2 of said operating stem 13, in the same groove 13.5 in which the U-shaped spring gripper 15, which secures said operating stem 13 in position with respect to said collar means 14, is engaged in a removable manner, allowing the rotation thereof about the axis of the cartridge 10. Said retaining ring 30 is positioned under said gripper 15, at and inside the upper axial hole of the collar means 14 of the cartridge 10.

In particular, said retaining ring 30 is arranged in sliding contact with respect to said collar means 14 and is made of wear-resistant polymer. Alternatively, the braking means can consist of an O-ring or more generally of an insert made of suitably hard elastomeric material advantageously produced in a wear-resistant compound.

For assembly, the control screw part of the operating stem 13 is passed through said upper axial hole of the collar means 14, provided with an internal guide, which automatically compresses the retaining ring 30 in said hole, so as to cause more or less forced coupling of the components.

The retaining ring 30 thus compressed then causes a friction on the operating stem 13, thereby creating the torque perceived by the user when rotating the tap control.

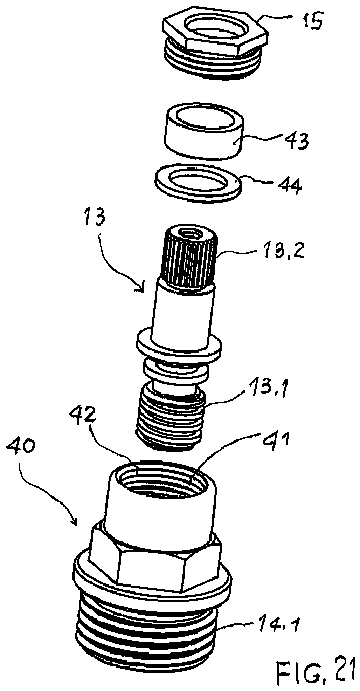

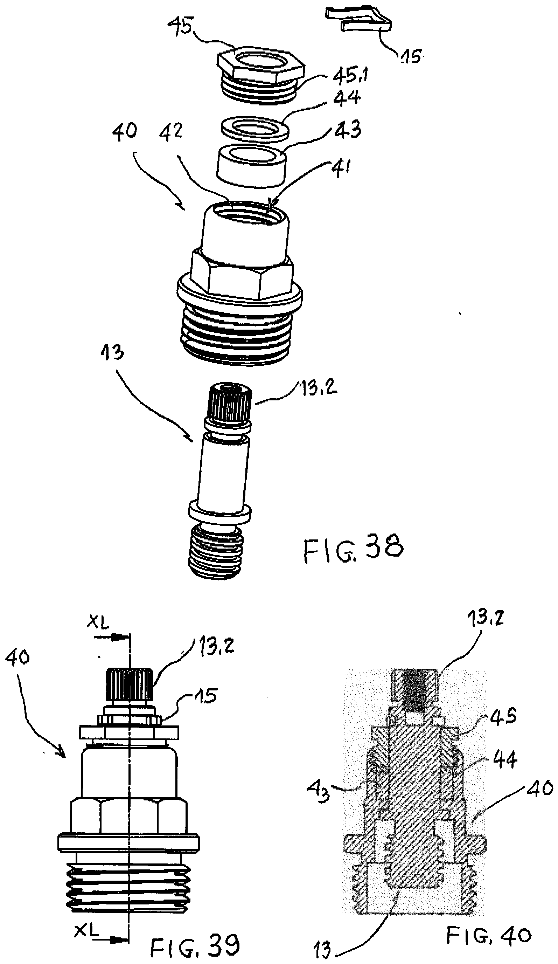

### Third variant of embodiment (Figs. 21 and 38-40)

According to this variant, the braking action is produced by means of braking means that allow discretionary and immediate modulation of the operating torque of the control member of the tap.

Referring to the first embodiment, the top collar means, indicated here with 40, are modified by providing in the upper part an integral tubular axial chamber 41, passed through axially by the upper part of the operating stem 13.

Said axial chamber 41 has an inner thread 42, emerging at the top. In said chamber 41 there are included a lower spring washer 43, made of polymer material, resting against an inner shoulder of said collar 40, an upper metal washer 44 superimposed on the washer 43 and a ring nut 45 having a thread 45.1 corresponding to said inner thread 42 of the chamber 41, in which said thread 45.1 is engaged by screwing. Spring washer 43, metal washer 44 and ring nut 45 are coaxial to one another and with respect to said collar means 40 and are passed through axially by the upper end of the operating stem 13. By screwing said ring nut 45, it thrusts the metal washer 44 toward the inner shoulder of the chamber 40, compressing the spring washer 43, which deforms against the stem 13, increasing the relative friction and hence the braking force. By acting inversely on said ring nut 45, the relative braking force is reduced.

A U-shaped retaining clip, inserted in a corresponding groove of the stem 13 projecting beyond said axial chamber 40, is indicated with 46.

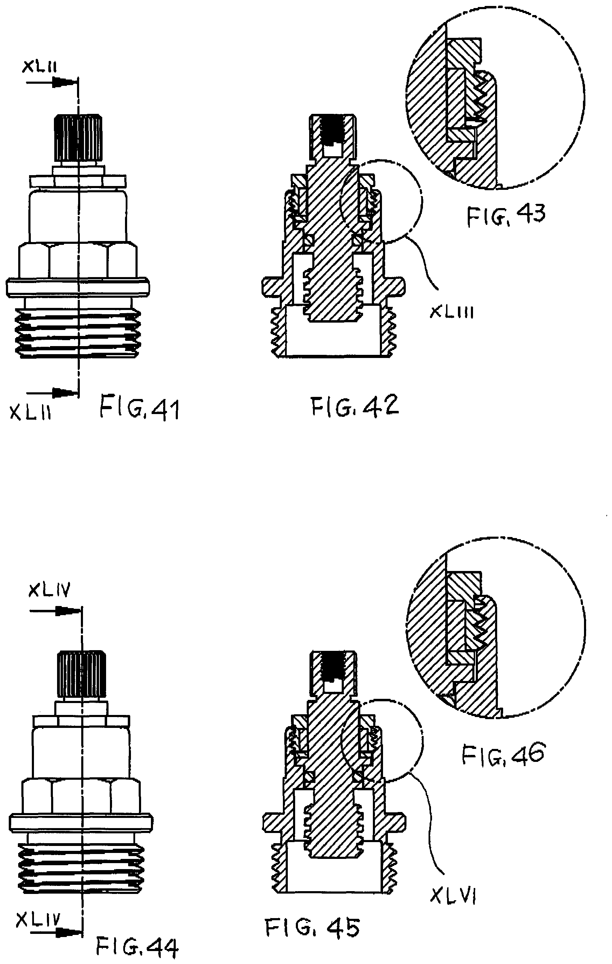

### Operation (Figs. 41 to 46)

By means of this arrangement, when the ring nut 45 is screwed abutting on the axial chamber 41, as well as preloading the spring element 43, it causes the retaining axial constraint of the operating stem 13. Once the ring nut 45 is clamped abutting on the axial chamber 41 it will leave a small clearance to prevent the operating stem and the contact washer from jamming, remaining blocked.

The arrangement described above does not allow immediate regulation of the braking torque, which can be obtained preferably by varying the turning diameter of the operating stem and, more precisely, the portion of the stem in contact with the spring washer 43.

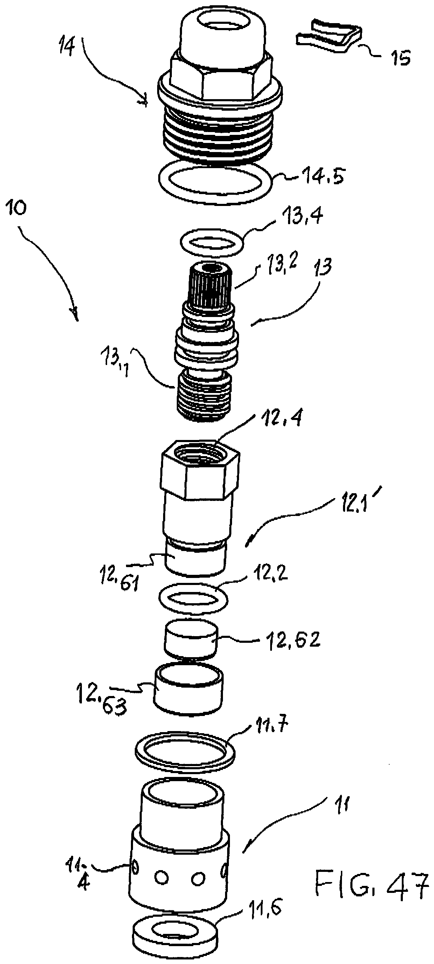

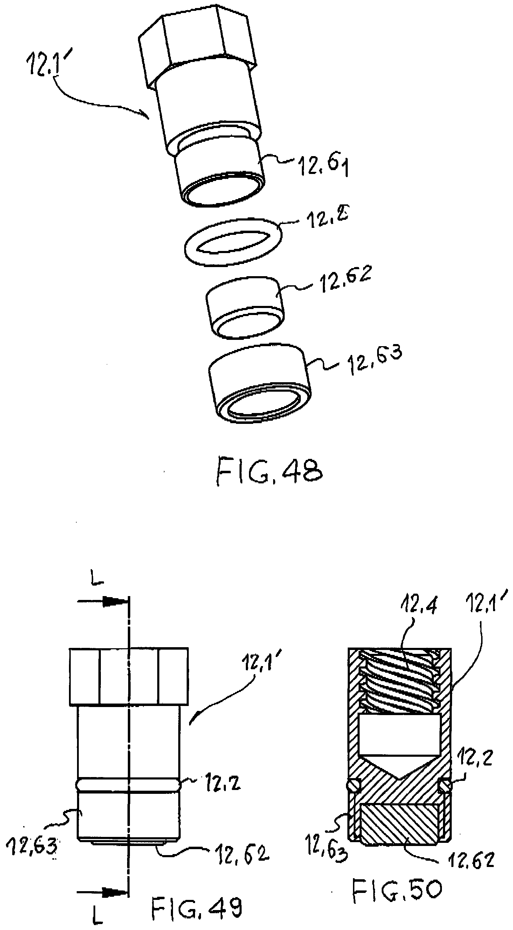

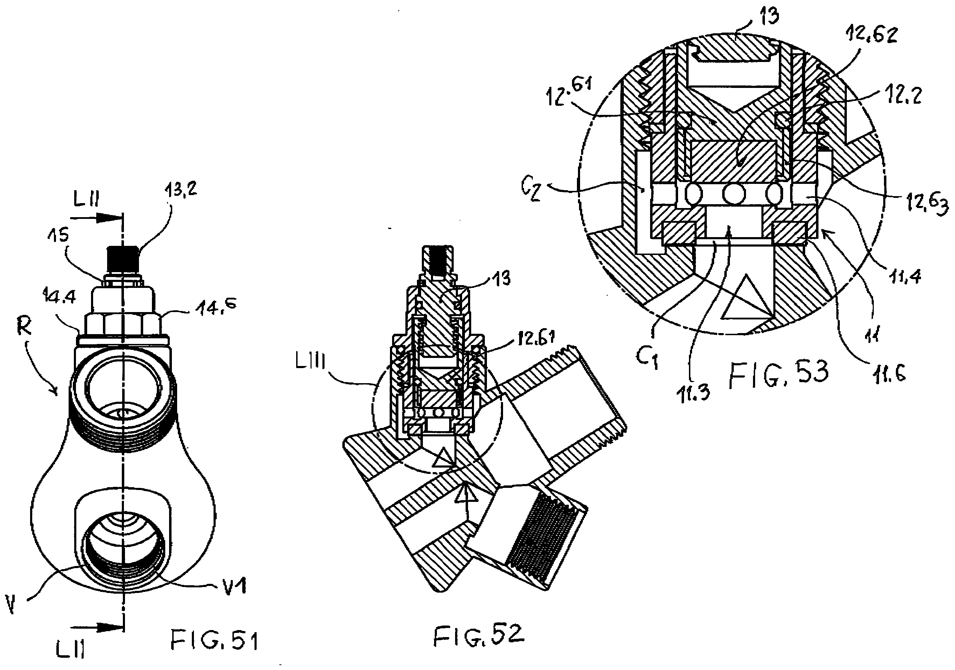

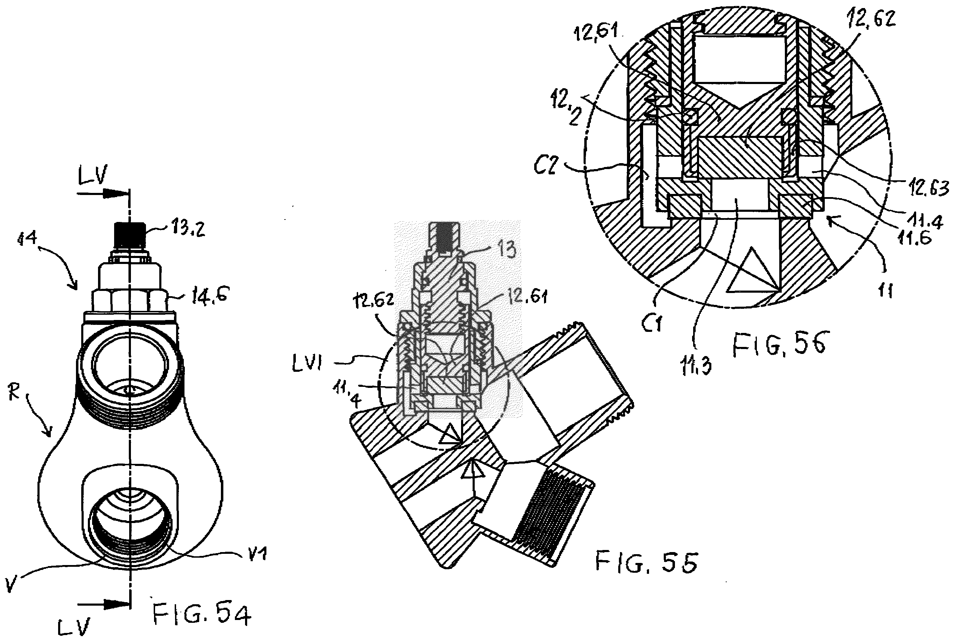

### Fourth variant according to Figs. 47 to 56

The interchangeable cartridge 10 according to the invention allows food grade requirements to be met.

As is known, thanks to its mechanical machinability and low cost, brass is the most widely used metal in the manufacture of hydraulic devices and components. However, this material is capable or releasing lead, a heavy metal that is highly toxic and harmful for people. To obtain food compatibility of the cartridge 10 according to the invention, the water must be prevented from coming into contact with parts of the cartridge made of this material. For this purpose, an indicative, but not limiting, technical solution will be briefly illustrated below.

With reference to Figs. 47 to 56, the obturator member 12.1' comprises a hollow head 12.61, in which there is inserted a front axial pad 12.62, made of food grade material and projecting beyond the head. A collar 12.63, made of food grade material, completely covers said head 12.61 laterally and at the front, allowing a part of the pad 12.62 to emerge at the front.

By means of this arrangement, the part of the obturator member 12.1' in contact with the flow of water passing through the tap R is coated by means (12.62, 12.63) made of food grade material.

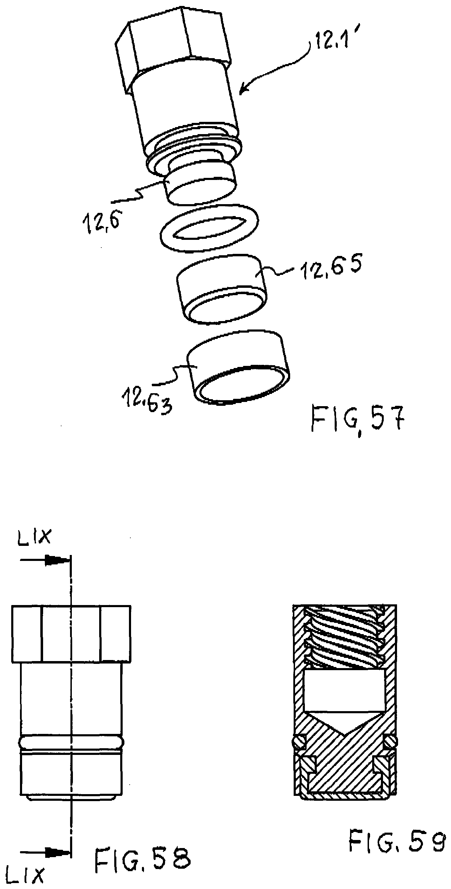

### Fifth variant according to Figs. 57 to 59

In this variant, the aforesaid pad 12.62 is replaced by a cap 12.65 made of food grade material, which is fitted over the head 12.6 of the obturator member 12.1'. The collar 12.63 laterally covers said cap 12.65 fitted over the head 12.6 of the obturator member 12.1'.

For the remaining part, reference should be made to the description provided above.

As is apparent from the above, the present invention allows the objects specified in the introduction to be achieved in a simple and advantageous manner.

## Claims

1. Tap of a domestic water supply network, comprising at least one tap valve seat through which a flow of water to be dispensed through said tap is branched,
**characterized in that** said tap comprises:
- an interchangeable cartridge, partially housed in said fluid-tight tap valve seat and connected in a removable manner with respect to this seat, wherein said cartridge comprises:
- a tubular body at least partially housed with seal in said tap valve seat, and including a chamber in which there is provided a cartridge valve seat having a lower axial water inlet and at least one upper radial water outlet; and
- obturator means, movable axially with respect to said cartridge valve seat inside said tubular body, and including an obturator member configured to produce hydraulic seal, with interposing of washer means, with respect to said cartridge valve seat, and an operating stem of said obturator member, made in one piece, respectively connected coaxially with a first end, with respect to said obturator member, and connected with the other end with respect to a tap handle that can be gripped by the user,
and **in that** said interchangeable cartridge provides, in said tap valve seat, a first lower hydraulically sealed chamber, through which said lower axial water inlet is in fluid communication with a water supply pipe of said system, and a second lateral hydraulically sealed chamber, through which said at least one upper radial water outlet is in fluid communication with a water dispensing mouth of said tap.

2. Tap according to claim 1, **characterized in that** said cylindrical tubular body (11) comprises a front annular seat (11.5), when installed facing toward the bottom of the tap valve seat (V), in which a front annular washer (11.6) is housed.

3. Tap according to claim 1 and/or 2, **characterized in that** said obturator member (12.1) comprises a cylindrical cup shaped member, having an inner thread (12.4), emerging in the upper end area of said cup shaped body, at an outer hexagonal flange (12.5), integral with this cup shaped body and having a spline function; at the bottom, said obturator member (12.1) has a head (12.6).

4. Tap according to claim 3, **characterized in that** said operating stem (13) has said first end (13.1) threaded in a manner corresponding to the inner thread (12.4) of said obturator member (12.1), with respect to which it is engaged through helical coupling; at the other end (13.2), said operating stem (13) has a plurality of axial grooves, for positive mechanical engagement with respect to a correspondingly grooved seat of an operating handle (M).

5. Tap according to one or more of claims 3 and/or 4, **characterized in that** said top collar means (14) have an externally threaded cylindrical tubular lower end (14.1), an intermediate part (14.2) internally configured as a hexagonal seat to receive in positive engagement said outer hexagonal flange (12.5), having the function of spline, of said obturator means (12), and an upper end area (14.3), coaxial with respect to the lower end area (14.1), and configured as a ring for the passage therethrough of said upper grooved end (13.2) of said operating stem (13).

6. Tap according to one or more of the preceding claims, **characterized in that** said upper end (13.2) of said operating stem (13) has a groove (13.5), emerging with respect to said upper end area (14.3) of end collar means (14), and in which there is engaged in a removable manner a removable spring gripper (15), which secures said operating stem (13) in position with respect to said collar means (14), allowing the rotation thereof about the axis of the cartridge (10).

7. Tap according to one or more of the preceding claims, **characterized in that** said tubular body (11) is inserted with slight force, in a removable and coaxial manner, with an upper end area inside said lower end area (14.1) of said collar means (14), and **in that** said lower end area (14.1) of said collar means (14) is externally threaded and is engaged in a removable manner in a corresponding inner thread (V1) of said tap valve seat (V), ensuring the installation of said cartridge (10).

8. Tap according to one or more of the preceding claims, **characterized in that** said obturator member (12.1) comprises a stop means (12.7) that, at the end of travel of said obturator member (12.1) with respect to said tubular body (11), abuts against a corresponding inner annular shoulder (11.8) of said tubular body (11).

9. Tap according to one or more of the preceding claims, **characterized in that** said cartridge valve seat (11.2) is produced in one piece with said tubular body (11), respectively is produced as separate member and then positioned inside said tubular body.

10. Tap according to one or more of the preceding claims, **characterized in that** said hexagonal flange (12.5) of said obturator member (12.1) is engaged, in positive mechanical engagement, with respect to said hexagonal cavity (14.2) of said collar means (14) and **in that** the height of said hexagonal cavity (14.2) is greater than or equal to the travel of said obturator member (12.1) with respect to the tubular body (11) and respective cartridge valve seat (11.2).

11. Tap according to claim 1, **characterized in that** said operating stem and said obturator member are produced in a single rod-like body (20), which comprises:
- an upper axial end (20.2) configured as operating stem having the upper end configured for positive mechanical engagement with respect to a correspondingly grooved seat of an operating handle (M);
- a lower axial end (20.1) configured as obturator member having an integral head (12.6) of obturator member, and
- in its intermediate part, an outer thread 20.3;
and **in that** said top collar means (21) are provided, in an upper end area, with an inner thread (21.1) corresponding to said outer thread (20.3) of said rod-like body (20) and which is connected with helical coupling with respect to said thread (21.1) of said collar means (21).

12. Tap according to one or more of the preceding claims, **characterized in that** said interchangeable cartridge (10) is provided with friction braking means, to increase the operating torque.

13. Tap according to claim 12, **characterized in that** said braking means comprise at least one C-shaped insert (30), inserted on said upper end (13.2) of said operating stem (13) and positioned at and inside the upper axial hole of said collar means (14) of the cartridge (10), where said insert (30) is arranged in sliding contact with respect to said collar means (14).

14. Tap according to claim 12, **characterized in that** said braking means comprise a spring washer (43), resting against an inner shoulder of said collar means (40), a metal washer (44), superimposed on said spring washer (43) and a ring nut (45) having a thread (45.1) corresponding to said inner thread (42) of a chamber (41) of said collar means (40), wherein said thread (45.1) is engaged by screwing; wherein said spring washer (43), metal washer (44), ring nut (45) are coaxial to one another and with respect to said collar means (40) and are passed through axially by the upper end of the operating stem (13).

15. Tap according to one or more of the preceding claims, **characterized in that** said obturator member (12.1') comprises a hollow head (12.61), in which there is inserted a front axial pad (12.62), made of food grade material and projecting beyond this head, a collar (12.63), made of food grade material, which completely covers said head (12.61) laterally and at the front, allowing a part of the pad (12.62) to emerge at the front, and **in that** the part of the obturator member (12.1') in contact with the flow of water passing through the tap (R) is coated by means (12.62, 12.63) made of food grade material.

16. Tap according to one or more of claims 1 to 15, **characterized in that** said obturator member (12.1') comprises a cap (12.65) made of food grade material, which is fitted over the head (12.6) of the obturator member (12.1') and a collar (12.63) that laterally covers said cap (12.65) fitted over said head (12.6) of the obturator member (12.1'), and **in that** the part of the obturator member (12.1') in contact with the flow of water passing through the tap (R) is coated by means (12.65, 12.63) made of food grade material.
